# EUROPÄISCHE PATENTSCHRIFT

(11) **EP 3 074 208 B1**
(45) Veröffentlichungstag und Bekanntmachung des Hinweises auf die Patenterteilung: **12.02.2020**
(21) Anmeldenummer: 14833112.7
(22) Anmeldetag: 26.11.2014
(51) Int. Cl.: B29C 67/00, B28B 7/46

(54) **3D-DRUCKVERFAHREN MIT SCHLICKER**
3D PRINTING METHOD USING SLIP
PROCÉDÉ D'IMPRESSION 3D À BARBOTINE

(30) Priorität: 27.11.2013 DE 102013019716
(43) Veröffentlichungstag der Anmeldung: 05.10.2016
(73) Patentinhaber: Voxeljet AG, 86316 Friedberg (DE)
(72) Erfinder: EDERER, Ingo, 82269 Geltendorf (DE); GÜNTHER, Daniel, 81371 München (DE)
(74) Vertreter: Helbig, Christian
(86) Internationale Anmeldenummer: PCT/DE2014/000602
(87) Internationale Veröffentlichungsnummer: WO 2015/078430

(56) Entgegenhaltungen:
- EP-A2- 0 431 924
- WO-A1-2005/090055
- WO-A2-2012/164078

## Beschreibung

Die Erfindung betrifft ein Verfahren zum Herstellen von dreidimensionalen Modellen mittels sinterfähigem Material.

Verfahren zum Herstellen von dreidimensionalen Formkörpern (Formteile, Modelle, Bauteile) sind aus dem Stand der Technik bekannt. Derartige Verfahren werden auch als "Rapid Prototyping" oder "3D-Druck" bezeichnet.

Derartige Verfahren sind beispielsweise "Selective Laser Sintern" (SLS), Stereolithographie, "Solid Ground Curing" (SGC), "Fused Deposition Molding" (FDM) oder 3D-Binderdruckverfahren.

In allen Verfahren wird ein Formkörper auf einer Bauebene oder in einem Bauraum auf der Grundlage von CAD Daten schichtweise aufgebaut.

Spezielle Ausgestaltungen der oben genannten Verfahren sind z.B. zu finden in der WO2012/164078. Hier wird ein Verfahren zum Herstellen eines metallischen oder keramischen Formkörpers beschrieben, in dem eine Suspension aus metallischem oder keramischem Material eingesetzt wird. Diese Druckschrift offenbart das erfindungsgemäße Verfahren nicht und legt dieses auch nicht nahe. Die EP 0 431 924 A2 offenbart ein 3D Druckverfahren unter Verwendung eines Bindermaterials. Die WO 2005/090055 A1 betrifft ein Verfahren und eine Vorrichtung zur Herstellung dreidimensionaler Objekte mittels Lasertechnik und Auftragen eines Absorbers mittels Inkjetverfahrens.

Die EP 1 648 686 B1 beschreibt ein Verfahren zum selektiven Sintern von Teilchenmaterial unter Verwendung eines strahlungsabsorbierenden Materials. Diese Druckschrift offenbart das erfindungsgemäße Verfahren nicht und legt dieses auch nicht nahe.

Die bekannten Verfahren des Standes der Technik weisen verschiedene Probleme und Nachteile auf.

Beispielsweise entsteht beim schichtweisen Sintern von losen Partikel-Schüttungen ein Volumenschwund, der desto höher ausfällt, je geringer die Dichte in der Partikelschüttung ist. Üblicherweise werden mit den aus dem Stand der Technik bekannten Verfahren zum Auftragen von Partikelmaterialien in dünner Schicht auf ein Baufeld typische Dichten von weniger als 60% im Verhältnis zum Vollmaterial erreicht. D.h. wenn ein dichtes Bauteil entstehen soll, beträgt der Volumenschund mehr als 40% und damit der lineare Schwund noch mehr als 16%. Ein derartiger Schwund, zumal wenn er schichtweise auftritt, kann zu Verzug im gewünschten Formteil führen, da untere Schichten evtl. bereits vollständig geschwunden sind und sich resultierende Kräfte auf die bereits verfestigten Strukturen ergeben. Ohne Stützstrukturen können sich die verfestigten Partikelbereiche im nicht gesinterten Partikelmaterial frei bewegen und verformen. Ist der Verzug groß genug, dass Teile der gesinterten Oberfläche aus dem Baufeld ragen, kann es sein, dass die Beschichtunseinrichtung die gesinterten Bereiche beim erneuten Schichtauftrag mitreißt und kein weiterer geordneter Aufbau des Formteils stattfinden kann. Zudem können in den Bauteilen Ungenauigkeiten in der Abbildung im Vergleich zu den CAD-Daten entstehen, da es zu Verschiebungen in den einzelnen Partikelschichten beim Auftragen oder beim Verfahren der Bauebene kommen kann. Gewünscht ist auch eine hohe Packdichte in den hergestellten Formkörpern, die in bekannten Verfahren nicht immer gewährleistet ist.

Es war deshalb eine Aufgabe der vorliegenden Erfindung ein Verfahren bereitzustellen, mit dem qualitativ hochwertige und abbildungsgenaue Formkörper herstellbar sind, weiterhin mit dem eine hohe Partikelpackung in einem Formkörper ermöglicht wird und somit eine sehr genaue Abbildung der CAD-Daten erreicht werden kann, oder zumindest die Nachteile der Verfahren des Standes der Technik vermindert oder vermieden werden können.

### Kurze Zusammenfassung der Erfindung

In einem Aspekt betrifft die Erfindung ein Verfahren zum Herstellen von Formkörpern, gemäß Anspruch 1.

### Ausführliche Beschreibung der Erfindung

Die Erfindung wird im Folgenden näher beschreiben, wobei einzelne Begriffe im Folgenden näher erläutert werden.

"Sinterfähiges Material" im Sinne der Erfindung ist jedes Material oder Materialgemisch (201, 202), das in partikulärer Form vorliegt und mittels Energieeintrag verfestigt werden kann. In einem ersten Verfahrensschritt kann zunächst ein Pulverkuchen hergestellt werden. Beispiele für "sinterfähiges Material" sind feinkörnige, keramische, metallische oder kunststoff-basierte Materialien. Diese Materialien sind dem Fachmann auf dem Gebiet des 3D-Druckes bekannt und müssen somit hier nicht im Detail beschrieben werden. Insbesondere geeignet in der Erfindung sind Polyamide, die vorzugsweise als sehr feine Pulver verwendet werden.

"Schlicker" oder "Materialdispersion" im Sinne der Erfindung besteht aus einer Trägerflüssigkeit und partikulärem Material (z.B. sinterfähiges Material (201 oder 202)), wobei das Verhältnis von partikulärem Material und Trägerflüssigkeit je nach den Materialien und den Maschinenanforderungen individuell eingestellt werden kann. Hierbei haben die Partikelgröße, die Materialeigenschaften der partikulären Materialien, die verwendete Trägerflüssigkeit und die Art des Auftragsmittels einen Einfluss auf das Mischverhältnis. Das in dem "Schlicker" enthaltene partikuläre Material kann ein einziges Material sein oder ein Gemisch aus unterschiedlichen Materialien. Vorzugsweise beinhaltet es oder besteht es aus einem zumindest teilweise schmelzbaren Material. Vorzugsweise ist es ein Metall, eine Keramik, ein Thermoplast, ein Kunststoff wie beispielsweise PMMA, der vorzugsweise sehr feinkörnig ist, oder ein Glaspulver oder eine Mischung aus mehreren der vorgenannten Materialien wie z.B. Glaspulver gemischt mit einem Polymer, wie beispielsweise PMMA. Materialgemische werden dann verwendet, wenn in einem ersten Schritt ein verfestigtes Formteil, (Grünkörper, Formteil) entstehen soll, der in einem weiteren Arbeitsschritt und vorzugsweis in einer anderen Vorrichtung einer weiteren Behandlung unterzogen wird, vorzugsweise hohen Temperaturen, um beispielsweise den Keramikanteil oder den Metallanteil in dem Grünkörper zu versintern. Der "Schlicker" wird vorzugsweise vor dem Aufragen in einer geeigneten Vorrichtung gerührt oder Schwingungen unterzogen, dass er beim Auftragen als eine im Wesentlichen gleichmäßige Dispersion vorliegt. Die Materialschicht entsteht dann dadurch, dass die Trägerflüssigkeit zumindest teilweise abläuft oder/und abdampft.

Die "Trägerflüssigkeit" (200) im Sinne der Erfindung ist jede mit dem jeweiligen partikulären Material kombinierbare Flüssigkeit, die das partikuläre Material dispergieren kann, ohne es aufzulösen. Vorzugsweise ist die "Trägerflüssigkeit" Wasser oder ein organisches Lösungsmittel, vorzugsweise ein Alkohol.

"Materialschicht" im Sinne der Erfindung ist die Schicht, die mit einem Auftragsmittel (auch als Recoater bezeichnet) schichtweise auf beispielsweise die Bauebene (vorzugsweise die Bauplattform) bzw. die letzte vorhergehende Materialschicht aufgetragen wird und nach Entfernen oder Verdampfen eines Teils oder des wesentlichen Teils der Trägerflüssigkeit entsteht und die im weiteren selektiv verfestigt wird, um den herzustellenden Formkörper zu ergeben. Die Materialschicht wird in ihrer Schichtdicke mit geeigneten Mitteln individuell eingestellt. Die Schichtdicke der aufgetragenen Partikelschicht kann 1 - 500 µm betragen, vorzugsweise 100 µm, oder 200 µm.

"Bindermaterial" im Sinne der Erfindung ist ein Material, das selektiv auf jede Partikelschicht aufgebracht wird und ein Energie-absorbierendes oder Strahlung-absorbierendes Material umfasst oder aus ihm besteht. Dabei kann erfindungsgemäß das Aufbringen des "Bindermaterials" nach jedem Partikelauftrag erfolgen oder in regelmäßigen oder unregelmäßigen Abstanden, beispielsweise nach jedem zweiten, dritten, vierten, fünften oder sechsten Partikelschichtauftrag. Das "Bindermaterial" wird dabei mit geeigneten Mitteln wie einem Druckkopf (100) oder anderen geeigneten Auftragsmitteln in einer für das Verfahren geeigneten und vorteilhaften Menge gemäß des aktuellen Querschnittes des gewünschten Formkörpers aufdosiert. Im Zusammenspiel mit der Wärme- oder Energiequelle wird dabei geeignetes Energie-absorbierendes oder Strahlung-absorbierendes Material verwendet, das auch in Hinsicht auf das verwendete Partikelmaterial über die entsprechenden Eigenschaften verfügt.

"Energie-absorbierendes Material" im Sinne der Erfindung oder "Strahlung-absorbierendes Material" ist jegliches Material, das Energie oder Wärme aufnimmt und an das Umgebungsmaterial abgibt und so eine lokale Temperaturerhöhung bewirkt. Dadurch kann ein selektives Verfestigen erreicht werden.

Geeignete Materialien im Sinne der Erfindung sind beispielsweise IR-Absorber, insbesondere enthalten diese Russ oder/und Graphit.

"Auftragsvorrichtung", "Auftragemittel" oder "Schlickerauftragsvorrichtung" oder "Dosierer" (101) im Sinne der Erfindung ist jegliche Vorrichtung mit der der Schlicker gezielt und dosierbar auftragbar ist, um eine Materialschicht zu erzeugen, die eine definierte Schichtdicke aufweist. Die "Schlickerauftragsvorrichtung" kann auch als Recoter bezeichnet werden und ist so konstruiert, dass eine einheitliche Materialschicht auf die Bauebene bzw. die in einem vorherigen Arbeitsschritt aufgebrachte Materialschicht aufgetragen werden kann.

Unter "Druckvorrichtung" im Sinne der Erfindung ist ein Mittel zu verstehen, das geeignet ist, das Bindermaterial in einem definierten Bereich auf der Materialschicht in vorbestimmter Menge (Volumen) und zeitlich definiert aufzutragen.

"Bauebene" oder "Bauplattform" (z.B. 105) im Sinne der Erfindung ist der Baubereich als Fläche, auf die der Schlicker aufgetragen wird und die Materialschicht entsteht. Der Baubereich entspricht in seiner Fläche im wesentlichen der Bauebene. Die "Bauebene" kann Teil eines Baubehälters zur Durchführung des Verfahrens im Batchverfahren sein bzw. ist in den Baubehälter einschiebbar und herausnehmbar und vorzugsweise höhenverstellbar. "Bauebene" in einem kontinuierlichen Verfahrensaufbau ist die Fläche, auf die der Schlicker horizontal oder vorzugsweise schräg, d.h. in einem Winkel kleiner 90° zu der horizontalen Bauebene aufgebracht wird.

"Energieeintrag" im Sinne der Erfindung ist das Einbringen von Wärme- oder Strahlungsenergie während des Verfahrens. Insbesondere das Einbringen von Wärme- oder Strahlungsenergie in den Bauraum insgesamt oder lokal. "Lokal" im Sinne der Erfindung bedeutet, dass eine Energiequelle wie ein IR-Strahler (401) oder gleichwirkende Vorrichtungen (z.B. eine Kombination von 400 und 401) über der obersten Materialschicht verfahren werden oder sich darüber befindet und somit die Temperatur in der obersten Materialschicht, vorzugsweise in der obersten und darunter liegenden Materialschicht über die Umgebungstemperatur angehoben wird. Der Energieeintrag bewirkt, dass die Materialschichten, auf die ein Energie-absorbierendes Bindermaterial aufgebracht wurde, sich verbinden, vorzugsweise versintern, und so den dreidimensionalen Formkörper entsprechend den Computerdaten (CAD-Daten) bilden.

"Energiequelle" im Sinne der Erfindung ist eine Vorrichtung, die Energie beispielsweise in Form von Wärmestrahlung (401) abgibt oder jede andere gleichwirkende Vorrichtung, die diesen Zweck erfüllt und in dem erfindungsgemäßen Verfahren somit einsetzbar ist.

Unter "Geordnetem Abkühlen" im Sinne der Erfindung ist zu verstehen, dass der Formkörper in einer Art und Weise während des Verfahrensprozesses oder nach Abschluss des Materialschichtaufbaus in einem zeitlichen Rahmen abgekühlt wird, der auf die verwendeten Materialien so abgestimmt ist, damit das fertig gestellte Formteil bestmögliche Materialeigenschaften aufweist und hinsichtlich Materialschwund und Verzug sowie Formteilgenaugkeit bestmögliche Arbeitsergebnisse erzielt werden. Vorzugsweise wird das Formteil mit geeigneten Mitteln langsam über einen Zeitraum von einer oder mehreren Stunden abgekühlt, oder in einem Schritt schockgekühlt.

Bevorzugte Aspekte der Erfindung werden im Folgenden weiter erläutert.

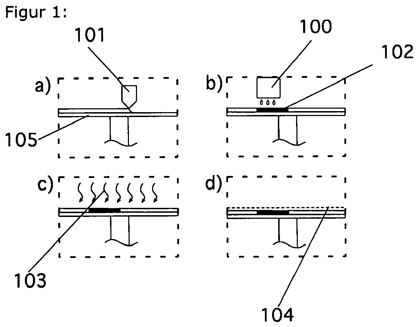

Die Erfindung betrifft ein Verfahren gemäß Anspruch 1 zum Herstellen dreidimensionaler Formteile in einer Vorrichtung, das die folgenden Schritte in einem gegebenenfalls temperierten Bauraum umfasst (siehe auch Figur 1):
a. Herstellen einer Materialschicht durch Auftragen von Schlicker mit einem Auftragsmittel auf eine Bauebene (vorzugsweise Bauplattform), gegebenenfalls in einem Bauraum, in einer vorbestimmten Schichtdicke,
b. Auftragen eines flüssigen Bindermaterials auf ausgewählte Bereiche der Materialschicht,
c. Einbringen von Energie,
d. Absenken der Bauebene um eine gewünschte Schichtdicke oder Anheben des Auftragsmittels und gegebenenfalls weiterer Vorrichtungsmittel um eine gewünschte Schichtdicke,
e. Wiederholen der Schritte a.) - d.),
   wobei das Bindermaterial ein Energie-absorbierendes Material enthält oder daraus besteht,
f. Lösen des die Formteile umgebenden Materials, um die Formteile zu gewinnen.

Das erfindungsgemäße Verfahren zeichnet sich durch eine Vielzahl von Vorteilen und positiven Effekten aus. Beispielsweise kann durch die Verwendung eines Schlickers, insbesondere von partikulärem Material in einer Dispersion, beim Auftragen und zum Erstellen einer Materialschicht vorteilhafter Weise eine gute und feste Packung der Materialschicht erreicht werden. Auch können mit dem erfindungsgemäßen Verfahren überraschender Weise feinste Partikelmaterialien zum Einsatz kommen, die in anderen bekannten Verfahren des 3D-Drucks nicht verwendbar waren. Weiterhin kann mit dem erfindungsgemäßen Verfahren in einer ersten Stufe des Verfahrens vorteilhafter Weise ein fester Pulverkuchen oder Partikelkuchen erzielt werden. Das erfindungsgemäße Verfahren erreicht so eine sehr stabile Positionierung und Lagerung der Partikel in den aufgetragenen Schichten. Somit wird eine Partikelverschiebung verhindert, was sich positiv auf die Baugenauigkeit auswirkt.

Der Schlicker umfasst eine Trägerflüssigkeit (200) und partikuläres Material (201, 202). Das partikuläre Material ist zumindest teilweise aufschmelzbar.

Vorzugsweise werden die Prozessbedingungen so gewählt, dass das Formteil durch zumindest teilweises selektives Aufschmelzen (203, 204) des Materials im Prozess entsteht.

Im Schlicker kann erfindungsgemäß jede mit den anderen Komponenten kompatible Trägerflüssigkeit (200) verwendet werden, vorzugsweise wird sie ausgewählt aus der Gruppe bestehend aus Wasser oder einem organischen Lösungsmittel, vorzugsweise einem Alkohol. Das partikuläre Material ist ein sinterfähiges Material (202, 203), ausgewählt aus der Gruppe bestehend aus einem Thermoplast, einem Polykondensat, vorzugsweise ein Polyamid (PA), aus metallischen oder/und keramischen Partikeln oder einem Gemisch davon. Die Trägerflüssigkeit (200) ist so gewählt, dass sich das partikuläre Material (202,203) darin nicht löst.

Erfindungsgemäss enthält das Energie-absorbierende Material Graphit oder Russ.

Das Verfahren kann in üblichen 3D-Druckvorrichtungen durchgeführt werden, die vorzugsweise Modifikationen aufweisen wie einen Mischer (300) für den Schlicker. Der Schlicker wird mit üblichen und für dieses Material geeigneten Mitteln aufgebracht, wobei der Schlicker vorzugsweise mit einer Beschichtervorrichtung (101) aufgebracht wird.

Die Schichtdicke der Materialschicht kann mit verschiedenen Vorrichtungsmechanismen eingestellt werden. So kann beispielsweise die Beschichtungseinheit (101) und damit verbundene Mittel um die entsprechende Schichtdicke nach oben verfahren werden. Eine andere Möglichkeit ist das Absenken der Bauebene (105). Möglich ist auch, dass ein Baubehälter verwendet wird, in dem die Bauebene (105) verfahrbar ist. Vorzugsweise wird die vorbestimmte Höhe der Materialschicht durch den Abstand der Beschichtervorrichtung (101) von der Bauebene eingestellt. Wird ein kontinuierliches Verfahren gefahren, beispielsweise indem die Materialschicht in einem Winkel zur Bauebene aufgetragen wird, ergibt sich die Schichtdicke durch den Vortrieb im Prozessbetrieb.

Der Bauraum oder die Umgebung des Beschichters (101) kann temperiert werden und auf eine für das Verfahren vorteilhafte Temperatur eingestellt und gehalten werden. Hierzu kann das Temperieren mit Mitteln außerhalb oder innerhalb des Bauraumes (400, 401) oder in der Umgebung des Schichtauftragsortes erfolgen, vorzugsweise wird die Bauebene beheizt oder mit IR (401) bestrahlt.

Entsprechend der verwendeten partikulären Materialien und der Trägerflüssigkeit wird die Temperatur ausgewählt und eingestellt. Vorzugsweise wird der Bauraum bzw. die Umgebungstemperatur auf eine Temperatur von 40 °C bis 200 °C, vorzugsweise auf 150 °C bis 190 °C, mehr bevorzugt auf 160 °C bis 170 °C, temperiert.

Um das Formteil nach dem selektiven Auftragen des Energieabsorbierenden Bindermaterials zu sintern oder zumindest teilweise zu verschmelzen (203, 204) wird der Energieeintrag nach jedem, jedem zweiten oder nach jedem dritten bis zwölften Materialschichtaufbauschritt erfolgen.

Der Energieeintrag wird in Form von elektromagnetischer Energie (401), mittels Heizstrahler im IR-A oder/und IR-B-Bereich oder mittels IR-Strahler erfolgen.

Dabei werden die Verfahrensbedingungen so ausgewählt und eingestellt, dass die Temperatur in der Materialschicht, vorzugsweise in der letzten Materialschicht, auf 190 °C bis 210 °C, vorzugsweise auf 200 °C, gebracht wird.

Nachdem der Aufbau des Formteils (102) abgeschlossen ist, wird das Formteil eingebettet in dem partikulärem Material abgekühlt. Zuletzt wird das Formteil (102) von dem nicht verfestigten Material (502) getrennt, d.h. entpackt. Dabei wird so vorgegangen, dass das hergestellte Formteil nicht beschädigt wird. Vorzugsweise wird das Entpacken des Formteils in einem Flüssigkeitsbad, durch Zugabe oder Abspritzen (500, 501) des Materialblockes (502) mit einer wässrigen Flüssigkeit (501) oder mittels anderem geeigneten Vorgehen erfolgen. Die wässrige Flüssigkeit sollte dabei in ähnlicher Weise wie die Trägerflüssigkeit für die Herstellung des Schlickers so ausgewählt werden, dass sich das partikuläre Material darin nicht löst.

Das Bindermaterial wird mit dem Fachmann bekannten Vorrichtungsmitteln selektiv aufgebracht, vorzugsweise mittels einer Druckvorrichtung (100), die vorzugsweise computergesteuerte Düsen aufweist.

Es können handelsübliche Schlicker verwendet werden oder die Schlicker individuell zusammengemischt werden. Vorteilhaft wird der Schlicker in einem Behälter vorgehalten, der eine Rühreinrichtung (300) oder einen Rüttler aufweist, damit der Schlicker eine gleichmäßige Dispersion ist und somit ein gleichmäßiger Materialauftrag gewährleistet wird. Vorzugsweise wird der Schlicker kurz vor dem Auftragen aus partikulärem Material und einer Trägerflüssigkeit zusammengemischt.

Nach dem Schlickerauftrag entsteht eine Materialschicht mit vorbestimmter Schichtdicke. Dies wird vorteilhafter Weise erreicht durch Entfernen, vorzugsweise Verdampfen, der Trägerflüssigkeit, vorzugsweise in weniger als 90 Sekunden pro Materialschicht, vorzugsweise 40 bis 90 Sekunden, vorzugsweise 60 bis 80 Sekunden.

Wie ausgeführt wurde können verschiedene partikuläre Materialien verwendet werden, die unterschiedliche Partikeldurchmesser aufweisen können. Vorzugsweise wird ein partikuläres Material mit einem mittleren Durchmesser von 1 bis 250µm, vorzugsweise von 10 bis 150 µm, mehr bevorzugt von 30 bis 80µm, verwendet.

Die Schichtdicke kann individuell eingestellt werden und auch während des Aufbauprozesses variiert werden. Vorzugsweise beträgt die Schichtdicke der Materialschicht 1 - 500µm, vorzugsweise 30 - 300 µm, mehr bevorzugt 50 - 150µm.

Das Bindermaterial wird je nach Schichtdicke und Materialzusammenstellung entsprechend und vorteilhaft dosiert. Vorzugsweise beträgt der Anteil des Bindermaterials weniger als 20 Vol.-%, vorzugsweise weniger als 10 Vol.-%, mehr bevorzugt weniger als 5 Vol.-%, noch mehr bevorzugt weniger als 2 Vol.-% bezogen auf das Gesamtvolumen des Formteils.

Vorzugsweise weist die Materialschicht nach dem Entfernen der Trägerflüssigkeit etwa 50 - 80 % der Festkörperdichte des partikulären Materials auf.

Nach dem Entpacken des Formteils kann das Formteil weiteren Behandlungsschritten unterzogen werden. Vorzugsweise sind die weiteren Verfahrensschritte ausgewählt aus einer Wärmebehandlung und Sintern.

Das erfindungsgemäße Verfahren kann mittels einem auswechselbaren Baubehälter im Batchverfahren oder in einem kontinuierlichen Verfahren durchgeführt wird. Die 3D-Druckvorrichtung wird entsprechende dem Fachmann bekannte Vorrichtungsmerkmale aufweisen.

Vorzugsweise wird das Auftragen des Schlickers horizontal erfolgen (siehe Figur 1) oder in einer bevorzugten Ausführungsform in einem Winkel kleiner 90° zu der horizontalen Bauebene (Schrägdruckverfahren). Das erfindungsgemäße Verfahren ist besonders geeignet für ein Schrägdruckverfahren und vorzugsweise in Kombination mit kontinuierlicher Verfahrensführung, da ein Schrägdruckverfahren besondere Anforderungen an die Verschiebefestigkeit der Materialschichten hat. Diese speziellen Anforderungen werden in besonders vorteilhafter Weise mit dem erfindungsgemäßen Verfahren erfüllt.

Ein weiterer Vorteil des erfindungsgemäßen Verfahrens ist, dass Materialien Verwendung finden können sowie Formteile hergestellt werden können, die bisher so nicht produziert werden konnten. Insbesondere ist ein Vorteil bei der Verwendung von sehr feinen Partikelmaterialien, dass vorteilhafter Weise eine sehr dichte Packung der Schicht erreicht werden kann. Dies hat Vorteile in Bezug auf die Festigkeit des schon vor dem selektiven Verfestigungsschritt erhaltenen Baukörpers an sich bzw. des Grünkörpers an sich. Weiterhin wird dadurch der Schwund beim Sintern reduziert und somit die Formkörpergenauigkeit im Vergleich zu den CAD-Daten verbessert. Insbesondere wird mit dem erfindungsgemäßen Verfahren ein geringerer Schwund als bei bekannten Verfahren erreicht und in Folge werden Verzug und Verwerfungen im Bauteil deutlich verringert oder gänzlich vermieden und somit die Bauteilqualität merklich erhöht.

Zudem ist es von Vorteil, dass durch die sehr feinen verwendbaren Partikelmaterialien hohe räumliche Auflösungen erzielt werden können. Dies kann sowohl mit einer feineren Druckauflösung als auch mit einer geringeren Schichtstärke genutzt werden. Die so erzeugten Bauteile weisen gegenüber Vergleichsteilen des Standes der Technik höhere Oberflächengüten auf.

In einer weiteren bevorzugten Ausführungsform ist die Bauebene temperiert, sodass dem Schlicker schnell die Trägerflüssigkeit entzogen wird und ein stabiler Körper (102) entsteht. Vorzugsweise wird dem aufgebrachten Schlicker durch zusätzliche Wärmeenergie weitere Trägerflüssigkeit (200) entzogen, wodurch der Pulverkuchen noch stabiler wird. Dies kann beispielsweise durch die Verwendung von IR-Bestrahlung (401) erreicht werden.

In einem zweiten Prozessschritt bewirkt die IR-Bestrahlung (401), dass die mit dem Bindermaterial bedruckten Bereiche verschmelzen bzw. versintern und einen Formkörper bilden, der leicht entpackt werden kann.

Dieser Formkörper kann dann in bevorzugten Ausführungsformen weiteren Verfahrensschritten unterzogen werden.

Kurze Beschreibung der Figuren:
Fig. 1: Schema eines erfindungsgemäßen Verfahrensablaufes

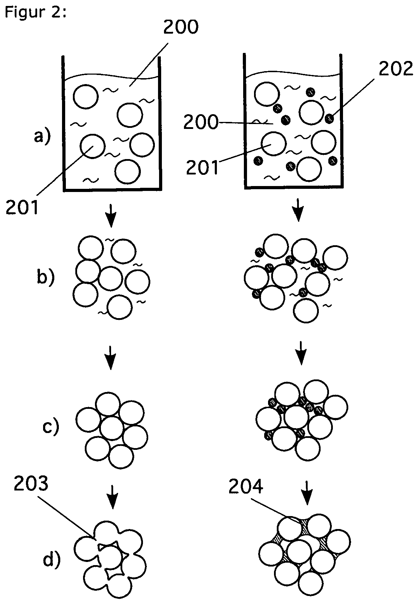

Fig. 2: Illustration der Verdichtung der Partikelschüttung während eines erfindungsgemäßen Verfahrensablaufes

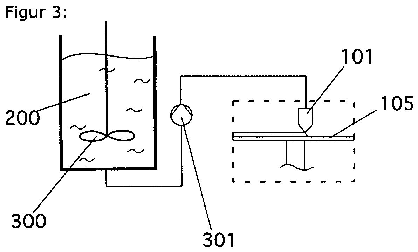

Fig. 3: Schema einer Vorrichtung zur Durchführung des erfindungsgemäßen Verfahrens

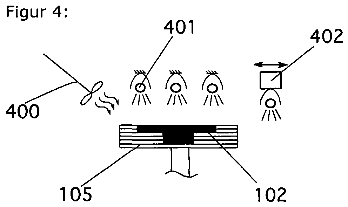

Fig. 4: Vorrichtungen zur Einbringung von Energie im erfindungsgemäßen Verfahren

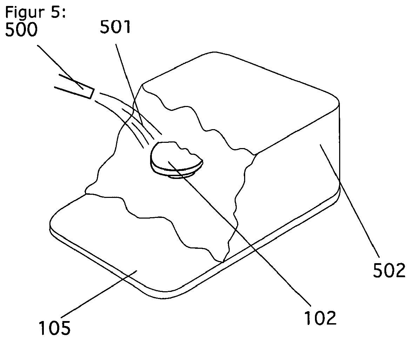

Fig. 5: Illustration des Auslösens eines Bauteils

### Bezugszeichen:

- 100: Druckkopf
- 101: Schlickerauftragseinheit
- 102: Bauteil
- 103: Energie
- 104: Abgesenkte Schicht
- 105: Bauplattform
- 200: Dispersionsmedium
- 201: Sinterfähige und nicht sinterfähige Partikel
- 202: Binderpartikel
- 203: Sinterbrücken
- 204: Klebebrücken
- 300: Rührer
- 301: Pumpe
- 400: Lüfter
- 401: Strahlungsquelle
- 402: Verfahreinheit
- 500: Spüldüse
- 501: Lösemittelstrahl
- 502: Partikelmaterialkuchen

## Patentansprüche

1. Verfahren zum Herstellen dreidimensionaler Formteile in einer Vorrichtung, das die Schritte umfasst:
a. Herstellen einer Materialschicht durch Auftragen von Schlicker mit einem Auftragsmittel auf eine Bauebenein einer vorbestimmten Schichtdicke, wobei der Schlicker eine Trägerflüssigkeit und partikuläres Material umfasst, wobei das partikuläre Material ein zumindest teilweise schmelzbares Material ist oder ein solches umfasst, wobei das partikuläre Material ein sinterfähiges Material ist und ausgewählt wird aus der Gruppe bestehend aus einem Thermoplast, einem Polykondensat, vorzugsweise ein Polyamid (PA), aus metallischen oder/und keramischen Partikeln oder einem Gemisch davon,
b. Auftragen eines flüssigen Bindermaterials auf ausgewählte Bereiche der Materialschicht,
c. Einbringen von Energie, zum Sintern oder zumindest teilweise Verschmelzen, wobei der Energieeintrag in Form von elektromagnetischer Energie, mittels Heizstrahler im IR-A oder/und IR-B-Bereich erfolgt oder mittels IR-Strahler oder mittels Laser erfolgt,
d. Absenken der Bauebene um eine gewünschte Schichtdicke oder Anheben des Auftragsmittels und gegebenenfalls weiterer Vorrichtungsmittel um eine gewünschte Schichtdicke,
e. Wiederholen der Schritte a.) - d.), wobei das Bindermaterial ein Energie-absorbierendes Material enthält oder daraus besteht, wobei das Energie-absorbierende Material Graphit oder Russ enthält, und Energie und Wärme aufnimmt und an das Umgebungsmaterial abgibt und so eine lokale Temperaturerhöhung bewirkt,
f. Lösen des die Formteile umgebenden Materials, um die Formteile zu gewinnen.

2. Verfahren nach Anspruch 1, wobei die Bauebene in einem Bauraum angeordnet ist.

3. Verfahren nach Anspruch 1 oder 2,
wobei die Prozessbedingungen so gewählt werden, dass das Formteil durch zumindest teilweises selektives Aufschmelzen des schmelzbaren Materials im Schlicker im Prozess entsteht.

4. Verfahren nach einem der vorhergehenden Ansprüche,
wobei die Trägerflüssigkeit ausgewählt wird aus der Gruppe bestehend aus Wasser oder einem organischen Lösungsmittel, vorzugsweise einem Alkohol.

5. Verfahren nach einem der vorhergehenden Ansprüche,
wobei das Auftragsmittel eine Beschichtervorrichtung ist, vorzugsweise wobei die gewünschte Schichtdicke der Materialschicht während des Verfahrens konstant bleibt oder variieren kann oder bei jedem Schlickerauftrag neu gewählt wird.

6. Verfahren nach einem der vorhergehenden Ansprüche, wobei die Bauplattform oder/und der Bauraum temperiert wird, und vorzugsweise das Temperieren mit Mitteln außerhalb oder innerhalb des Bauraumes erfolgt, vorzugsweise wird die Bauplattform beheizt oder mit IR bestrahlt.

7. Verfahren nach einem der vorhergehenden Ansprüche,
wobei die Bauplattform oder/und der Bauraum auf eine Temperatur von 40 °C bis 200 °C, vorzugsweise auf 150 °C bis 190 °C, mehr bevorzugt auf 160 °C bis 170 °C, temperiert wird.

8. Verfahren nach einem der vorhergehenden Ansprüche,
wobei der Energieeintrag nach jedem, jedem zweiten oder nach jedem dritten bis zwölften Materialschichtaufbauschritt erfolgt.

9. Verfahren nach einem der vorhergehenden Ansprüche,
wobei die Temperatur in der Materialschicht, vorzugsweise in der letzten Materialschicht, auf 190 °C bis 210 °C, vorzugsweise auf 200 °C, gebracht wird.

10. Verfahren nach einem der vorhergehenden Ansprüche, wobei das Entpacken des Formteils in einem Flüssigkeitsbad, durch Zugabe oder Abspritzen des Materialblockes mit einer wässrigen Flüssigkeit erfolgt.

11. Verfahren nach einem der vorhergehenden Ansprüche,
wobei das Bindermaterial mittels einer Druckvorrichtung aufgebracht wird.

12. Verfahren nach einem der vorhergehenden Ansprüche,
wobei der Schlicker kurz vor dem Auftragen aus partikulärem Material und einer Trägerflüssigkeit zusammengemischt wird.

13. Verfahren nach einem der vorhergehenden Ansprüche,
wobei die Materialschicht durch Entfernen, vorzugsweise Verdampfen, der Trägerflüssigkeit entsteht, vorzugsweise in weniger als 90 sek. pro Materialschicht, vorzugsweise 60 bis 80 Sekunden.

14. Verfahren nach einem der vorhergehenden Ansprüche, wobei das partikuläre Material einen mittleren Durchmesser aufweist von 1 bis 250µm, vorzugsweise von 10 bis 150 µm, mehr bevorzugt von 30 bis 80µm.

15. Verfahren nach einem der vorhergehenden Ansprüche,
wobei die Schichtdicke der Materialschicht 1 - 500µm, vorzugsweise 30 - 300 µm, mehr bevorzugt 50 - 150µm beträgt.

16. Verfahren nach einem der vorhergehenden Ansprüche,
wobei der Anteil des Bindermaterials weniger als 20 Vol.-%, vorzugsweise weniger als 10 Vol.-%, mehr bevorzugt weniger als 5 Vol.-%, noch mehr bevorzugt weniger als 2 Vol.-% beträgt.

17. Verfahren nach einem der vorhergehenden Ansprüche,
wobei die Partikelschicht nach dem Entfernen der Flüssigkeit etwa 50 - 80 % der Festkörperdichte des partikulären Materials aufweist.

18. Verfahren nach einem der vorhergehenden Ansprüche, wobei die weiteren Verfahrensschritte ausgewählt sind aus einer Wärmebehandlung und Sintern.

19. Verfahren nach einem der vorhergehenden Ansprüche, wobei das Verfahren in einem auswechselbaren Baubehälter im Batchverfahren oder in einem kontinuierlichen Verfahren durchgeführt wird.

20. Verfahren nach einem der vorhergehenden Ansprüche, wobei das Auftragen des Schlickers horizontal erfolgt oder in einem Winkel kleiner 90° zu der horizontalen Bauplattform.

## Claims

1. A method for producing three-dimensional moulded parts in a device, comprising the steps of:
a. producing a material layer by applying a slurry with an application means onto a construction plane in a predetermined layer thickness, the slurry comprising a carrier fluid and particulate material, wherein the particulate material is or comprises an at least partially fusible material, wherein the particulate material is a sinterable material and is selected from the group consisting of a thermoplastic, a polycondensate, preferably a polyamide (PA), metallic and/or ceramic particles or a mixture thereof,
b. applying a liquid binder material onto selected areas of the material layer,
c. energy input, for sintering or at least partial fusion, wherein the energy input takes place in the form of electromagnetic energy, by means of a radiator in the IR-A or/and IR-B range or by means of an IR radiator or by means of a laser,
d. lowering the construction plane by a desired layer thickness or lifting the application means and, if necessary, other means of the device by a desired layer thickness,
e. repeating steps a.) - d.),
wherein the binder material contains or consists of an energy-absorbing material, said energy-absorbing material containing graphite or carbon black, and absorbs and releases energy and heat to the surrounding material, thereby causing a local temperature increase,
f. removing the material surrounding the moulded parts to obtain the moulded parts.

2. The method according to claim 1, wherein the construction plane is arranged in a construction space.

3. The method according to claim 1 or 2, wherein the process conditions are selected such that the moulded part is formed by at least partially selectively fusing the fusable material in the slurry in the process.

4. The method according to any one of the preceding claims, wherein the carrier fluid is selected from the group consisting of water or an organic solvent, preferably an alcohol.

5. The method according to any one of the preceding claims, wherein the application means is a coating device, preferably wherein the desired layer thickness of the material layer remains constant or can vary during the process or is newly selected for each slurry application.

6. The method according to any one of the preceding claims, wherein the temperature of the construction platform or/and the construction space is adjusted, and preferably the temperature adjustment is carried out with means outside or inside the construction space, the construction platform preferably being heated or irradiated with IR.

7. The method according to any one of the preceding claims, wherein the construction platform or/and the construction space is adjusted to a temperature of 40°C to 200°C, preferably 150°C to 190°C, more preferably 160°C to 170°C.

8. The method according to any one of the preceding claims, wherein the energy input takes place after each, every second or after every third to twelfth material layer construction step.

9. The method according to any one of the preceding claims, wherein the temperature in the material layer, preferably in the last material layer, is adjusted to 190°C to 210°C, preferably 200°C.

10. The method according to any one of the preceding claims, wherein the moulded part is unpacked in a liquid bath, by adding an aqueous liquid to the material block or by spraying it off with an aqueous liquid.

11. The method according to any one of the preceding claims, wherein the binder material is applied by means of a printing device.

12. The method according to any one of the preceding claims, wherein the slurry is mixed together shortly before application from particulate material and a carrier fluid.

13. The method according to any one of the preceding claims, wherein the material layer is formed by removing, preferably evaporating, the carrier fluid, preferably in less than 90 seconds per material layer, preferably 60 to 80 seconds.

14. The method according to any one of the preceding claims, wherein the particulate material has an average diameter of 1-250µm, preferably 10-150 µm, more preferably 30-80µm.

15. The method according to any one of the preceding claims, wherein the layer thickness of the material layer is 1-500µm, preferably 30-300µm, more preferably 50-150µm.

16. The method according to any one of the preceding claims, wherein the proportion of the binder material is less than 20% by volume, preferably less than 10% by volume, more preferably less than 5% by volume, even more preferably less than 2% by volume.

17. The method according to any one of the preceding claims, wherein the particulate layer after removal of the liquid comprises about 50-80% of the solid density of the particulate material.

18. The method according to any one of the preceding claims, wherein the further process steps are selected from heat treatment and sintering.

19. The method according to any one of the preceding claims, wherein the method is carried out in an exchangeable construction container in a batch process or in a continuous process.

20. The method according to any one of the preceding claims, wherein the slurry is applied horizontally or at an angle of less than 90° to the horizontal construction platform.

## Revendications

1. Procédé de production de pièces moulées tridimensionnelles dans un dispositif, comprenant les étapes consistant à :
a. produire une couche de matériau par application d'une suspension à l'aide d'un moyen d'application sur un plan de construction dans une épaisseur de couche prédéterminée, la suspension comprenant un liquide porteur et un matériau particulaire, le matériau particulaire étant ou comprenant un matériau au moins partiellement fusible, le matériau particulaire étant un matériau frittable et étant choisi dans le groupe constitué par un thermoplastique, un polycondensat, de préférence un polyamide (PA), des particules métalliques et/ou céramiques ou leur mélange,
b. appliquer un liant liquide sur des zones sélectionnées de la couche de matériau,
c. apportant de l'énergie, pour le frittage ou au moins la fusion partielle, l'apport d'énergie se faisant sous forme d'énergie électromagnétique, au moyen d'un radiateur rayonnant dans la gamme IR-A ou/et IR-B ou au moyen d'un radiateur IR ou au moyen d'un laser,
d. abaisser le plan de construction par une épaisseur de couche souhaitée ou par un relèvement du moyen d'application et, si nécessaire, d'autres moyens du dispositif par une épaisseur de couche souhaitée,
e. répéter les étapes a.) - d.),
le matériau liant contenant un matériau absorbant de l'énergie ou consistant en un matériau absorbant de l'énergie, le matériau absorbant de l'énergie contenant du graphite ou du noir de carbone, et absorbant et libérant de l'énergie et de la chaleur dans le matériau environnant, provoquant ainsi une augmentation locale de température,
f. enlever le matériau entourant les pièces moulées pour obtenir les pièces moulées.

2. Procédé selon la revendication 1, dans lequel le plan de construction est disposé dans un espace de construction.

3. Procédé selon la revendication 1 ou 2, dans lequel les conditions de procédé sont choisies de telle sorte que la pièce moulée soit formée par fusion au moins partielle sélective du matériau fusible dans la suspension pendant le procédé.

4. Procédé selon l'une quelconque des revendications précédentes, dans lequel le liquide porteur est choisi dans le groupe constitué par l'eau ou un solvant organique, de préférence un alcool.

5. Procédé selon l'une quelconque des revendications précédentes, dans lequel le moyen d'application est un enducteur, de préférence dans lequel l'épaisseur de couche souhaitée de la couche de matériau reste constante ou peut varier pendant le procédé ou est sélectionnée à nouveau pour chaque application de ladite suspension.

6. Procédé selon l'une quelconque des revendications précédentes, dans lequel la température de la plateforme de construction et/ou de l'espace de construction est réglée, et de préférence ce réglage est effectué avec des moyens à l'extérieur ou à l'intérieur de l'espace de construction, la plateforme de construction étant de préférence chauffée ou irradiée par IR.

7. Procédé selon l'une quelconque des revendications précédentes, dans lequel la température de la plateforme de construction et/ou de l'espace de construction est réglée à une température de 40°C à 200°C, de préférence de 150°C à 190°C, plus préférablement de 160°C à 170°C.

8. Procédé selon l'une quelconque des revendications précédentes, dans lequel l'apport d'énergie a lieu après chaque, chaque seconde ou chaque troisième à douzième étape de construction de couche de matériau.

9. Procédé selon l'une quelconque des revendications précédentes, dans lequel la température dans la couche de matériau, de préférence dans la dernière couche de matériau, est réglée à une température de 190°C à 210°C, de préférence de 200°C.

10. Procédé selon l'une quelconque des revendications précédentes, dans lequel la pièce moulée est déballée dans un bain liquide, par ajoutage d'un liquide aqueux au bloc de matériau ou par lavage du bloc de matériau avec ledit liquide aqueux.

11. Procédé selon l'une quelconque des revendications précédentes, dans lequel le liant est appliqué au moyen d'un dispositif d'impression.

12. Procédé selon l'une quelconque des revendications précédentes, dans lequel la suspension est mélangée peu de temps avant son application, à partir d'un matériau particulaire et d'un liquide porteur.

13. Procédé selon l'une quelconque des revendications précédentes, dans lequel la couche de matériau est formée en éliminant, de préférence en évaporant, le liquide porteur, de préférence en moins de 90 secondes par couche de matériau, de préférence en 60 à 80 secondes.

14. Procédé selon l'une quelconque des revendications précédentes, dans lequel le matériau particulaire a un diamètre moyen de 1 à 250 µm, de préférence de 10 à 150 µm, plus préférablement de 30 à 80 µm.

15. Procédé selon l'une quelconque des revendications précédentes, dans lequel l'épaisseur de la couche de matériau est de 1 à 500 µm, de préférence de 30 à 300 µm, plus préférablement de 50 à 150 µm.

16. Procédé selon l'une quelconque des revendications précédentes, dans lequel la proportion du liant est inférieure à 20 % en volume, de préférence inférieure à 10 % en volume, plus préférablement inférieure à 5 % en volume, et encore plus préférablement inférieure à 2 % en volume.

17. Procédé selon l'une quelconque des revendications précédentes, dans lequel la couche particulaire après élimination du liquide comprend environ 50 à 80 % de la densité de solide du matériau particulaire.

18. Procédé selon l'une quelconque des revendications précédentes, dans lequel les autres étapes du procédé sont choisies parmi le traitement thermique et le frittage:

19. Procédé selon l'une quelconque des revendications précédentes, le procédé étant effectué dans un conteneur de construction remplaçable dans un procédé discontinu ou dans un procédé continu.

20. Procédé selon l'une quelconque des revendications précédentes, dans lequel la suspension est appliquée horizontalement ou à un angle inférieur à 90° par rapport à la plateforme de construction horizontale.
